# EUROPEAN PATENT APPLICATION

(11) **EP 3 484 235 A1**
(43) Date of publication of application: **15.05.2019**
(21) Application number: 17824481.0
(22) Date of filing: 03.07.2017
(51) Int. Cl.: H04W 76/20

(54) **METHOD AND APPARATUS FOR NOTIFYING MME OF UNSUCCESSFUL PAGING FOR TERMINAL**

(30) Priority: 05.07.2016 US 201662358157 P; 09.12.2016 US 201662431822 P
(71) Applicant: LG Electronics Inc., Seoul 07336 (KR)
(72) Inventor: KIM, Seokjung, Seoul 06772 (KR); XU, Jian, Seoul 06772 (KR); BYUN, Daewook, Seoul 06772 (KR)
(74) Representative: Frenkel, Matthias Alexander
(86) International application number: PCT/KR2017/007044
(87) International publication number: WO 2018/008925

(57) **Abstract**

Provided are a method for notifying, by a base station, a mobility management entity (MME) of unsuccessful paging for a terminal in a wireless communication system, and an apparatus for supporting the same. The method may comprise the steps of: transmitting a paging message to the terminal; detecting that paging for the terminal is unsuccessful; and transmitting, to the MME, a paging failure indication indicating that the paging for the terminal is unsuccessful.

## Description

### BACKGROUND OF THE INVENTION

### Field of the invention

The present invention relates to a wireless communication system, and more particularly, to a method in which a base station informs a mobility management entity (MME) about a failure of paging for a terminal, and an apparatus supporting the method.

### Related Art

In order to meet the demand for wireless data traffic soring since the 4th generation (4G) communication system came to the market, there are ongoing efforts to develop enhanced 5th generation (5G) communication systems or pre-5G communication systems. For the reasons, the 5G communication system or pre-5G communication system is called the beyond 4G network communication system or post long-term evolution (LTE) system.

In the discussion of NR standardization, an RRC_CONNECTED state and an RRC_IDLE state are defined by default as an RRC state, and an RRC_INACTIVE state is additionally introduced. A user equipment (UE) in the RRC_INACTIVE state performs a radio control procedure similarly to the RRC_IDLE state in order to reduce power consumption. However, the UE in the RRC_INACTIVE state maintains a connection state between the UE and a network similarly to the RRC_CONNECTED state in order to minimize a control procedure required when transitioning to the RRC_CONNECTED state.

### SUMMARY OF THE INVENTION

Meanwhile, in case of a UE in the RRC INACTIVE state, even if a base station (BS) has failed in paging for the UE, an S-GW/UPF does not know whether the BS delivers downlink data provided by the S-GW/UPF to the UE, and thus the S-GW/UPF may transmit subsequent downlink data to the BS. Therefore, the BS may buffer data and repeat the paging towards the UE. When the BS continuously performs data buffering and paging even if the BS has failed in the paging for the UE, unnecessary signalling between the UE and the BS or between the BSs may be caused. Accordingly, there is a need to propose a procedure in which the BS informs the MME/AMF about a failure of paging for the UE.

One embodiment provides a method for informing, by a base station (BS), a mobility management entity (MME) about a failure of a paging for a user equipment (UE) in a wireless communication system. The method may include: transmitting a paging message to the UE; detecting the failure of the paging for the UE; and transmitting a paging failure indication indicating the failure of the paging for the UE, to the MME.

The UE may be in a lightly connected mode or a radio resource control (RRC) inactive mode. The lightly connected mode or the RRC inactive mode may be a mode where a connection between the UE and the BS is released and the UE related connection between the BS and the MME is kept.

The method may further include: initiating a paging timer. The failure of the paging for the UE may be detected, when the BS does not receive a response to the transmitted paging message from the UE until the initiated paging timer expires. The paging failure indication may be transmitted to the MME, when the failure of the paging for the UE is detected.

The method may further include: re-transmitting the paging message to the UE, when the BS does not receive a response to the transmitted paging message from the UE. The failure of the paging for the UE may be detected, when a number of total transmission of the paging message is equal to a number of threshold transmission of the paging message. The paging failure indication may be transmitted to the MME, when the failure of the paging for the UE is detected.

The method may further include: determining to release the UE related connection between the BS and the MME. The method may further include: transmitting a message indicating to release the UE related connection between the BS and the MME, to the MME. The method may further include: deleting a UE context for the UE. The UE related connection between the BS and the MME may be released.

The method may further include: buffering a downlink data received from serving gate way (S-GW). The method may further include: discarding the buffered downlink data when the paging for the UE is failed.

The MME may be an Access and Mobility Function (AMF).

Another embodiment provides a method for receiving, by a mobility management entity (MME), a failure of a paging for a user equipment (UE) from a base station (BS) in a wireless communication system. The method may include: receiving a paging failure indication indicating the failure of the paging for the UE, from the BS; and transmitting a paging message to at least one BS.

The at least one BS may be a BS having a cell belonging to a tracking area in which the UE is registered.

Unnecessary signalling occurring between a base station (BS) and a user equipment (UE) or between BSs can be reduced.

### BRIEF DESCRIPTION OF THE DRAWINGS

FIG. 1 shows LTE system architecture.
FIG. 2 shows a control plane of a radio interface protocol of an LTE system.
FIG. 3 shows a user plane of a radio interface protocol of an LTE system.
FIG. 4 shows a structure of a 5G system.
FIG. 5 is a drawing for explaining a problem which may occur when a BS transmits a paging message to a UE in an RRC_INACTIVE state.
FIG. 6 shows a procedure in which a UE informs an MME about a failure of paging for a UE according to an embodiment of the present invention.
FIG. 7 shows an MME/AMF-initiated UE context release procedure according to an embodiment of the present invention.
FIG. 8 is a block diagram showing a method in which a BS informs an MME about a failure of paging for a UE according to an embodiment of the present invention.
FIG. 9 is a block diagram showing a method in which an MME receives from a BS a failure of paging for a UE according to an embodiment of the present invention.
FIG. 10 is a block diagram illustrating a wireless communication system according to the embodiment of the present invention.

### DESCRIPTION OF EXEMPLARY EMBODIMENTS

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), etc. The CDMA may be implemented with a radio technology such as universal terrestrial radio access (UTRA) or CDMA-2000. The TDMA may be implemented with a radio technology such as global system for mobile communications (GSM)/general packet ratio service (GPRS)/enhanced data rate for GSM evolution (EDGE). The OFDMA may be implemented with a radio technology such as institute of electrical and electronics engineers (IEEE) 802.11 (Wi-Fi), IEEE 802.16 (WiMAX), IEEE 802.20, evolved UTRA (E-UTRA), etc. IEEE 802.16m is evolved from IEEE 802.16e, and provides backward compatibility with a system based on the IEEE 802.16e. The UTRA is a part of a universal mobile telecommunication system (UMTS). 3rd generation partnership project (3GPP) long term evolution (LTE) is a part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE. 5G is an evolution of the LTE-A.

For clarity, the following description will focus on LTE-A. However, technical features of the present invention are not limited thereto.

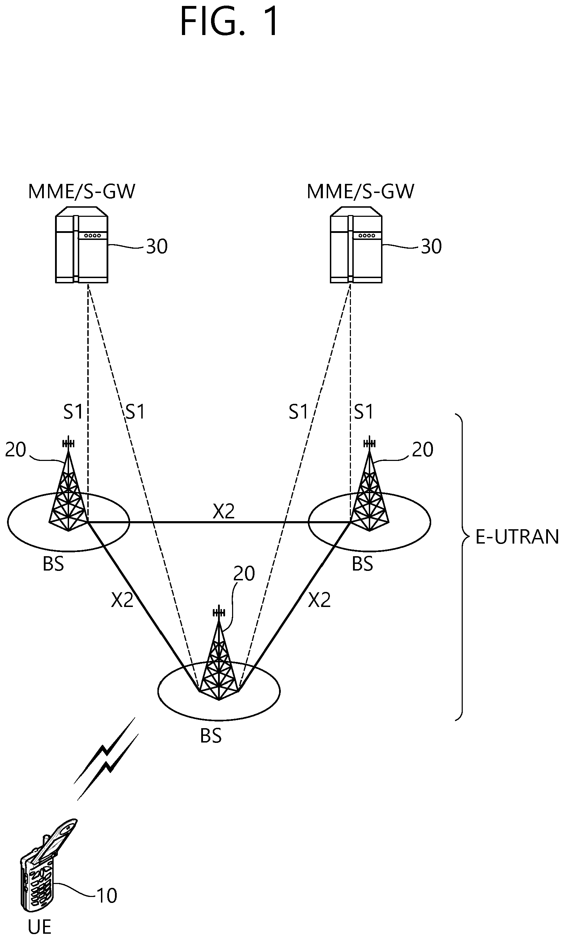

FIG. 1 shows LTE system architecture. The communication network is widely deployed to provide a variety of communication services such as voice over internet protocol (VoIP) through IMS and packet data.

Referring to FIG. 1, the LTE system architecture includes one or more user equipment (UE; 10), an evolved-UMTS terrestrial radio access network (E-UTRAN) and an evolved packet core (EPC). The UE 10 refers to a communication equipment carried by a user. The UE 10 may be fixed or mobile, and may be referred to as another terminology, such as a mobile station (MS), a user terminal (UT), a subscriber station (SS), a wireless device, etc.

The E-UTRAN includes one or more evolved node-B (eNB) 20, and a plurality of UEs may be located in one cell. The eNB 20 provides an end point of a control plane and a user plane to the UE 10. The eNB 20 is generally a fixed station that communicates with the UE 10 and may be referred to as another terminology, such as a base station (BS), a base transceiver system (BTS), an access point, etc. One eNB 20 may be deployed per cell. There are one or more cells within the coverage of the eNB 20. A single cell is configured to have one of bandwidths selected from 1.25, 2.5, 5, 10, and 20 MHz, etc., and provides downlink or uplink transmission services to several UEs. In this case, different cells may be configured to provide different bandwidths.

Hereinafter, a downlink (DL) denotes communication from the eNB 20 to the UE 10, and an uplink (UL) denotes communication from the UE 10 to the eNB 20. In the DL, a transmitter may be a part of the eNB 20, and a receiver may be a part of the UE 10. In the UL, the transmitter may be a part of the UE 10, and the receiver may be a part of the eNB 20.

The EPC includes a mobility management entity (MME) which is in charge of control plane functions, and a system architecture evolution (SAE) gateway (S-GW) which is in charge of user plane functions. The MME/S-GW 30 may be positioned at the end of the network and connected to an external network. The MME has UE access information or UE capability information, and such information may be primarily used in UE mobility management. The S-GW is a gateway of which an endpoint is an E-UTRAN. The MME/S-GW 30 provides an end point of a session and mobility management function for the UE 10. The EPC may further include a packet data network (PDN) gateway (PDN-GW). The PDN-GW is a gateway of which an endpoint is a PDN.

The MME provides various functions including non-access stratum (NAS) signaling to eNBs 20, NAS signaling security, access stratum (AS) security control, Inter core network (CN) node signaling for mobility between 3GPP access networks, idle mode UE reachability (including control and execution of paging retransmission), tracking area list management (for UE in idle and active mode), P-GW and S-GW selection, MME selection for handovers with MME change, serving GPRS support node (SGSN) selection for handovers to 2G or 3G 3GPP access networks, roaming, authentication, bearer management functions including dedicated bearer establishment, support for public warning system (PWS) (which includes earthquake and tsunami warning system (ETWS) and commercial mobile alert system (CMAS)) message transmission. The S-GW host provides assorted functions including per-user based packet filtering (by e.g., deep packet inspection), lawful interception, UE Internet protocol (IP) address allocation, transport level packet marking in the DL, UL and DL service level charging, gating and rate enforcement, DL rate enforcement based on APN-AMBR. For clarity MME/S-GW 30 will be referred to herein simply as a "gateway," but it is understood that this entity includes both the MME and S-GW.

Interfaces for transmitting user traffic or control traffic may be used. The UE 10 and the eNB 20 are connected by means of a Uu interface. The eNBs 20 are interconnected by means of an X2 interface. Neighbor eNBs may have a meshed network structure that has the X2 interface. The eNBs 20 are connected to the EPC by means of an S1 interface. The eNBs 20 are connected to the MME by means of an S1-MME interface, and are connected to the S-GW by means of S1-U interface. The S1 interface supports a many-to-many relation between the eNB 20 and the MME/S-GW.

The eNB 20 may perform functions of selection for gateway 30, routing toward the gateway 30 during a radio resource control (RRC) activation, scheduling and transmitting of paging messages, scheduling and transmitting of broadcast channel (BCH) information, dynamic allocation of resources to the UEs 10 in both UL and DL, configuration and provisioning of eNB measurements, radio bearer control, radio admission control (RAC), and connection mobility control in LTE_ACTIVE state. In the EPC, and as noted above, gateway 30 may perform functions of paging origination, LTE_IDLE state management, ciphering of the user plane, SAE bearer control, and ciphering and integrity protection of NAS signaling.

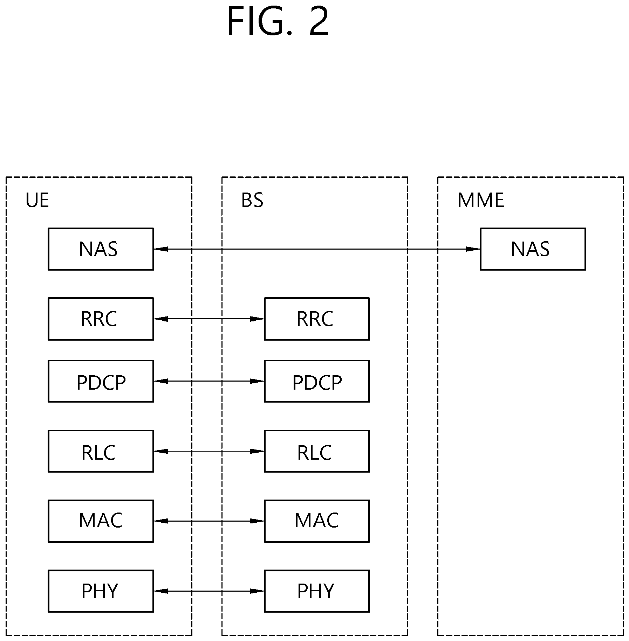

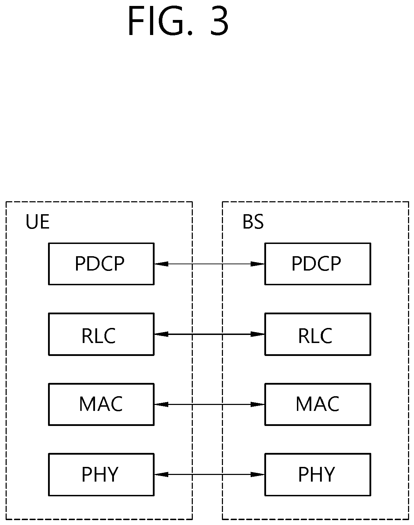

FIG. 2 shows a control plane of a radio interface protocol of an LTE system. FIG. 3 shows a user plane of a radio interface protocol of an LTE system.

Layers of a radio interface protocol between the UE and the E-UTRAN may be classified into a first layer (LI), a second layer (L2), and a third layer (L3) based on the lower three layers of the open system interconnection (OSI) model that is well-known in the communication system. The radio interface protocol between the UE and the E-UTRAN may be horizontally divided into a physical layer, a data link layer, and a network layer, and may be vertically divided into a control plane (C-plane) which is a protocol stack for control signal transmission and a user plane (U-plane) which is a protocol stack for data information transmission. The layers of the radio interface protocol exist in pairs at the UE and the E-UTRAN, and are in charge of data transmission of the Uu interface.

A physical (PHY) layer belongs to the L1. The PHY layer provides a higher layer with an information transfer service through a physical channel. The PHY layer is connected to a medium access control (MAC) layer, which is a higher layer of the PHY layer, through a transport channel. A physical channel is mapped to the transport channel. Data is transferred between the MAC layer and the PHY layer through the transport channel. Between different PHY layers, i.e., a PHY layer of a transmitter and a PHY layer of a receiver, data is transferred through the physical channel using radio resources. The physical channel is modulated using an orthogonal frequency division multiplexing (OFDM) scheme, and utilizes time and frequency as a radio resource.

The PHY layer uses several physical control channels. A physical downlink control channel (PDCCH) reports to a UE about resource allocation of a paging channel (PCH) and a downlink shared channel (DL-SCH), and hybrid automatic repeat request (HARQ) information related to the DL-SCH. The PDCCH may carry a UL grant for reporting to the UE about resource allocation of UL transmission. A physical control format indicator channel (PCFICH) reports the number of OFDM symbols used for PDCCHs to the UE, and is transmitted in every subframe. A physical hybrid ARQ indicator channel (PHICH) carries an HARQ acknowledgement (ACK)/non-acknowledgement (NACK) signal in response to UL transmission. A physical uplink control channel (PUCCH) carries UL control information such as HARQ ACK/NACK for DL transmission, scheduling request, and CQI. A physical uplink shared channel (PUSCH) carries a UL-uplink shared channel (SCH).

A physical channel consists of a plurality of subframes in time domain and a plurality of subcarriers in frequency domain. One subframe consists of a plurality of symbols in the time domain. One subframe consists of a plurality of resource blocks (RBs). One RB consists of a plurality of symbols and a plurality of subcarriers. In addition, each subframe may use specific subcarriers of specific symbols of a corresponding subframe for a PDCCH. For example, a first symbol of the subframe may be used for the PDCCH. The PDCCH carries dynamic allocated resources, such as a physical resource block (PRB) and modulation and coding scheme (MCS). A transmission time interval (TTI) which is a unit time for data transmission may be equal to a length of one subframe. The length of one subframe may be 1 ms.

The transport channel is classified into a common transport channel and a dedicated transport channel according to whether the channel is shared or not. A DL transport channel for transmitting data from the network to the UE includes a broadcast channel (BCH) for transmitting system information, a paging channel (PCH) for transmitting a paging message, a DL-SCH for transmitting user traffic or control signals, etc. The DL-SCH supports HARQ, dynamic link adaptation by varying the modulation, coding and transmit power, and both dynamic and semi-static resource allocation. The DL-SCH also may enable broadcast in the entire cell and the use of beamforming. The system information carries one or more system information blocks. All system information blocks may be transmitted with the same periodicity. Traffic or control signals of a multimedia broadcast/multicast service (MBMS) may be transmitted through the DL-SCH or a multicast channel (MCH).

A UL transport channel for transmitting data from the UE to the network includes a random access channel (RACH) for transmitting an initial control message, a UL-SCH for transmitting user traffic or control signals, etc. The UL-SCH supports HARQ and dynamic link adaptation by varying the transmit power and potentially modulation and coding. The UL-SCH also may enable the use of beamforming. The RACH is normally used for initial access to a cell.

A MAC layer belongs to the L2. The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. A MAC sublayer provides data transfer services on logical channels.

The logical channels are classified into control channels for transferring control plane information and traffic channels for transferring user plane information, according to a type of transmitted information. That is, a set of logical channel types is defined for different data transfer services offered by the MAC layer. The logical channels are located above the transport channel, and are mapped to the transport channels.

The control channels are used for transfer of control plane information only. The control channels provided by the MAC layer include a broadcast control channel (BCCH), a paging control channel (PCCH), a common control channel (CCCH), a multicast control channel (MCCH) and a dedicated control channel (DCCH). The BCCH is a downlink channel for broadcasting system control information. The PCCH is a downlink channel that transfers paging information and is used when the network does not know the location cell of a UE. The CCCH is used by UEs having no RRC connection with the network. The MCCH is a point-to-multipoint downlink channel used for transmitting MBMS control information from the network to a UE. The DCCH is a point-to-point bi-directional channel used by UEs having an RRC connection that transmits dedicated control information between a UE and the network.

Traffic channels are used for the transfer of user plane information only. The traffic channels provided by the MAC layer include a dedicated traffic channel (DTCH) and a multicast traffic channel (MTCH). The DTCH is a point-to-point channel, dedicated to one UE for the transfer of user information and may exist in both uplink and downlink. The MTCH is a point-to-multipoint downlink channel for transmitting traffic data from the network to the UE.

Uplink connections between logical channels and transport channels include the DCCH that may be mapped to the UL-SCH, the DTCH that may be mapped to the UL-SCH and the CCCH that may be mapped to the UL-SCH. Downlink connections between logical channels and transport channels include the BCCH that may be mapped to the BCH or DL-SCH, the PCCH that may be mapped to the PCH, the DCCH that may be mapped to the DL-SCH, and the DTCH that may be mapped to the DL-SCH, the MCCH that may be mapped to the MCH, and the MTCH that may be mapped to the MCH.

An RLC layer belongs to the L2. The RLC layer provides a function of adjusting a size of data, so as to be suitable for a lower layer to transmit the data, by concatenating and segmenting the data received from an upper layer in a radio section. In addition, to ensure a variety of quality of service (QoS) required by a radio bearer (RB), the RLC layer provides three operation modes, i.e., a transparent mode (TM), an unacknowledged mode (UM), and an acknowledged mode (AM). The AM RLC provides a retransmission function through an automatic repeat request (ARQ) for reliable data transmission. Meanwhile, a function of the RLC layer may be implemented with a functional block inside the MAC layer. In this case, the RLC layer may not exist.

A packet data convergence protocol (PDCP) layer belongs to the L2. The PDCP layer provides a function of header compression function that reduces unnecessary control information such that data being transmitted by employing IP packets, such as IPv4 or IPv6, may be efficiently transmitted over a radio interface that has a relatively small bandwidth. The header compression increases transmission efficiency in the radio section by transmitting only necessary information in a header of the data. In addition, the PDCP layer provides a function of security. The function of security includes ciphering which prevents inspection of third parties, and integrity protection which prevents data manipulation of third parties.

A radio resource control (RRC) layer belongs to the L3. The RLC layer is located at the lowest portion of the L3, and is only defined in the control plane. The RRC layer takes a role of controlling a radio resource between the UE and the network. For this, the UE and the network exchange an RRC message through the RRC layer. The RRC layer controls logical channels, transport channels, and physical channels in relation to the configuration, reconfiguration, and release of RBs. An RB is a logical path provided by the L1 and L2 for data delivery between the UE and the network. That is, the RB signifies a service provided the L2 for data transmission between the UE and E-UTRAN. The configuration of the RB implies a process for specifying a radio protocol layer and channel properties to provide a particular service and for determining respective detailed parameters and operations. The RB is classified into two types, i.e., a signaling RB (SRB) and a data RB (DRB). The SRB is used as a path for transmitting an RRC message in the control plane. The DRB is used as a path for transmitting user data in the user plane.

A Non-Access Stratum (NAS) layer placed over the RRC layer performs functions, such as session management and mobility management.

Referring to FIG. 2, the RLC and MAC layers (terminated in the eNB on the network side) may perform functions such as scheduling, automatic repeat request (ARQ), and hybrid automatic repeat request (HARQ). The RRC layer (terminated in the eNB on the network side) may perform functions such as broadcasting, paging, RRC connection management, RB control, mobility functions, and UE measurement reporting and controlling. The NAS control protocol (terminated in the MME of gateway on the network side) may perform functions such as a SAE bearer management, authentication, LTE_IDLE mobility handling, paging origination in LTE_IDLE, and security control for the signaling between the gateway and UE.

Referring to FIG. 3, the RLC and MAC layers (terminated in the eNB on the network side) may perform the same functions for the control plane. The PDCP layer (terminated in the eNB on the network side) may perform the user plane functions such as header compression, integrity protection, and ciphering.

### Hereinafter, An RRC state of a UE and RRC connection procedure are described.

An RRC state indicates whether an RRC layer of the UE is logically connected to an RRC layer of the E-UTRAN. The RRC state may be divided into two different states such as an RRC connected state and an RRC idle state. When an RRC connection is established between the RRC layer of the UE and the RRC layer of the E-UTRAN, the UE is in RRC_CONNECTED, and otherwise the UE is in RRC_IDLE. Since the UE in RRC_CONNECTED has the RRC connection established with the E-UTRAN, the E-UTRAN may recognize the existence of the UE in RRC_CONNECTED and may effectively control the UE. Meanwhile, the UE in RRC_IDLE may not be recognized by the E-UTRAN, and a CN manages the UE in unit of a TA which is a larger area than a cell. That is, only the existence of the UE in RRC_IDLE is recognized in unit of a large area, and the UE must transition to RRC_CONNECTED to receive a typical mobile communication service such as voice or data communication.

In RRC_IDLE state, the UE may receive broadcasts of system information and paging information while the UE specifies a discontinuous reception (DRX) configured by NAS, and the UE has been allocated an identification (ID) which uniquely identifies the UE in a tracking area and may perform public land mobile network (PLMN) selection and cell reselection. Also, in RRC_IDLE state, no RRC context is stored in the eNB.

In RRC_CONNECTED state, the UE has an E-UTRAN RRC connection and a context in the E-UTRAN, such that transmitting and/or receiving data to/from the eNB becomes possible. Also, the UE may report channel quality information and feedback information to the eNB. In RRC_CONNECTED state, the E-UTRAN knows the cell to which the UE belongs. Therefore, the network may transmit and/or receive data to/from UE, the network may control mobility (handover and inter-radio access technologies (RAT) cell change order to GSM EDGE radio access network (GERAN) with network assisted cell change (NACC)) of the UE, and the network may perform cell measurements for a neighbor cell.

In RRC_IDLE state, the UE specifies the paging DRX cycle. Specifically, the UE monitors a paging signal at a specific paging occasion of every UE specific paging DRX cycle. The paging occasion is a time interval during which a paging signal is transmitted. The UE has its own paging occasion.

A paging message is transmitted over all cells belonging to the same tracking area. If the UE moves from one TA to another TA, the UE will send a tracking area update (TAU) message to the network to update its location.

When the user initially powers on the UE, the UE first searches for a proper cell and then remains in RRC_IDLE in the cell. When there is a need to establish an RRC connection, the UE which remains in RRC_IDLE establishes the RRC connection with the RRC of the E-UTRAN through an RRC connection procedure and then may transition to RRC_CONNECTED. The UE which remains in RRC_IDLE may need to establish the RRC connection with the E-UTRAN when uplink data transmission is necessary due to a user's call attempt or the like or when there is a need to transmit a response message upon receiving a paging message from the E-UTRAN.

To manage mobility of the UE in the NAS layer, two states are defined, i.e., an EPS mobility management-REGISTERED (EMM-REGISTERED) state and an EMM-DEREGISTERED state. These two states apply to the UE and the MME. Initially, the UE is in the EMM-DEREGISTERED state. To access a network, the UE performs a process of registering to the network through an initial attach procedure. If the attach procedure is successfully performed, the UE and the MME enter the EMM-REGISTERED state.

To manage a signaling connection between the UE and the EPC, two states are defined, i.e., an EPS connection management (ECM)-IDLE state and an ECM-CONNECTED state. These two states apply to the UE and the MME. When the UE in the ECM-IDLE state establishes an RRC connection with the E-UTRAN, the UE enters the ECM-CONNECTED state. When the MME in the ECM-IDLE state establishes an S1 connection with the E-UTRAN, the MME enters the ECM-CONNECTED state. When the UE is in the ECM-IDLE state, the E-UTRAN does not have context information of the UE. Therefore, the UE in the ECM-IDLE state performs a UE-based mobility related procedure such as cell selection or reselection without having to receive a command of the network. On the other hand, when the UE is in the ECM-CONNECTED state, mobility of the UE is managed by the command of the network. If a location of the UE in the ECM-IDLE state becomes different from a location known to the network, the UE reports the location of the UE to the network through a tracking area update procedure.

### Hereinafter, a 5G network structure is described.

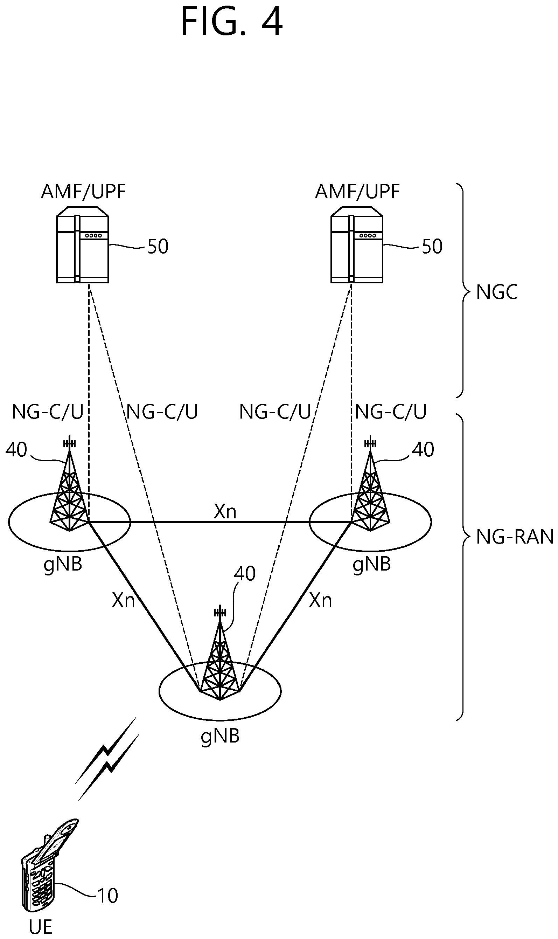

FIG. 4 shows a structure of a 5G system.

In case of an evolved packet core (EPC) having a core network structure of the existing evolved packet system (EPS), a function, a reference point, a protocol, or the like is defined for each entity such as a mobility management entity (MME), a serving gateway (S-GW), a packet data network gateway (P-GW), or the like.

On the other hand, in case of a 5G core network (or a NextGen core network), a function, a reference point, a protocol, or the like is defined for each network function (NF). That is, in the 5G core network, the function, the reference point, the protocol, or the like is not defined for each entity.

Referring to FIG. 4, the 5G system structure includes at least one UE 10, a next generation-radio access network (NG-RAN), and a next generation core (NGC).

The NG-RAN may include at least one gNB 40, and a plurality of UEs may be present in one cell. The gNB 40 provides the UE with end points of the control plane and the user plane. The gNB 40 is generally a fixed station that communicates with the UE 10 and may be referred to as another terminology, such as a base station (BS), a base transceiver system (BTS), an access point, or the like. One gNB 40 may be arranged in every cell. At least one cell may be present in a coverage of the gNB 40.

The NGC may include an access and mobility function (AMF) and a session management function (SMF) which are responsible for a function of a control plane. The AMF may be responsible for a mobility management function, and the SMF may be responsible for a session management function. The NGC may include a user plane function (UPF) which is responsible for a function of a user plane.

Interfaces for transmitting user traffic or control traffic may be used. The UE 10 and the gNB 40 may be connected by means of a Uu interface. The gNBs 40 may be interconnected by means of an X2 interface. Neighboring gNBs 40 may have a meshed network structure based on an Xn interface. The gNBs 40 may be connected to an NGC by means of an NG interface. The gNBs 40 may be connected to an AMF by means of an NG-C interface, and may be connected to a UPF by means of an NG-U interface. The NG interface supports a many-to-many-relation between the gNB 40 and the AMF/UPF 50.

A gNB host may perform functions such as functions for radio resource management, IP header compression and encryption of user data stream, selection of an AMF at UE attachment when no routing to an AMF can be determined from the information provided by the UE, routing of user plane data towards UPF(s), scheduling and transmission of paging messages (originated from the AMF), scheduling and transmission of system broadcast information (originated from the AMF or O&M), or measurement and measurement reporting configuration for mobility and scheduling.

An access and mobility function (AMF) host may perform primary functions such as NAS signalling termination, NAS signalling security, AS security control, inter CN node signalling for mobility between 3GPP access networks, idle mode UE reachability (including control and execution of paging retransmission), tracking area list management (for UE in idle and active mode), AMF selection for handovers with AMF change, access authentication, or access authorization including check of roaming rights.

A user plane function (UPF) host may perform primary functions such as anchor point for Intra-/inter-RAT mobility (when applicable), external PDU session point of interconnect to data network, packet routing & forwarding, packet inspection and user plane part of policy rule enforcement, traffic usage reporting, uplink classifier to support routing traffic flows to a data network, branching point to support multi-homed PDU session, QoS handling for user plane, e.g. packet filtering, gating, UL/DL rate enforcement, uplink traffic verification (SDF to QoS flow mapping), transport level packet marking in the uplink and downlink, or downlink packet buffering and downlink data notification triggering.

A session management function (SMF) host may perform primary functions such as session management, UE IP address allocation and management, selection and control of UP function, configuring traffic steering at UPF to route traffic to proper destination, controlling part of policy enforcement and QoS, or downlink data notification.

### Hereinafter, an RRC INACTIVE state of a UE is described.

In the discussion on NR standardization, an RRC_INACTIVE state has been newly introduced in addition to the existing RRC_CONNETED state and RRC_IDLE state. The RRC_INACTIVE state may be a concept similar to a lightly connected mode. The RRC_INACTIVE state is a state introduced to efficiently manage a specific UE (for example, mMTC UE). A UE in the RRC_INACTIVE state performs a radio control procedure similarly to a UE in the RRC_IDLE state in order to reduce power consumption. However, the UE in the RRC_INACTIVE state maintains a connection state between the UE and a network similarly to the RRC_CONNECTED state in order to minimize a control procedure required when transitioning to the RRC_CONNECTED state. In the RRC_INACTIVE state, a radio access resource is released, but wired access may be maintained. For example, in the RRC_INACTIVE state, the radio access resource is released, but an NG interface between a gNB and a NGC or an S1 interface between an eNB and an EPC may be maintained. In the RRC_INACTIVE state, a core network recognizes that the UE is normally connected to a BS. On the other hand, the BS may not perform connection management for the UE in RRC_INACTIVE state.

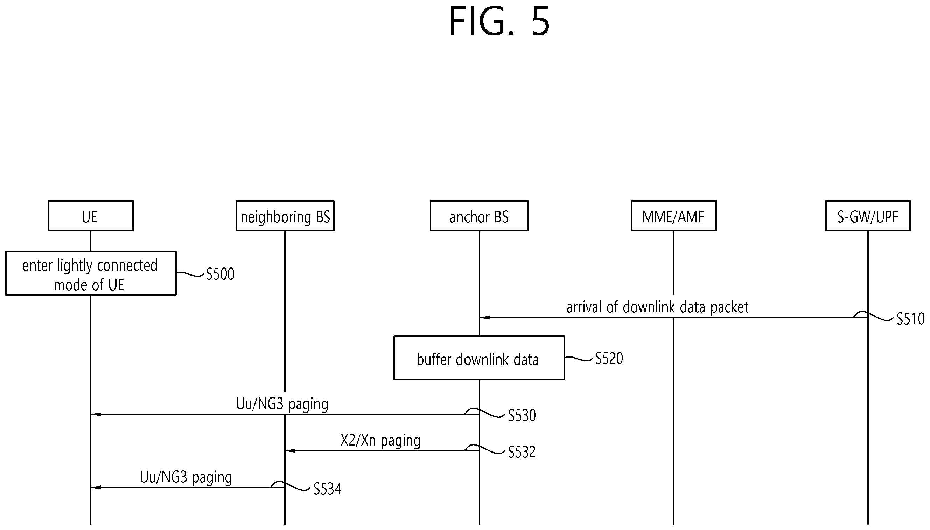

In case of a UE in the lightly connected mode, an MME may maintain an S1 connection of the activated UE to hide mobility and state transitions from a core network. In other words, in case of a UE in the RRC_INACTIVE state, an AMF may maintain an NG connection of the activated UE to hide mobility and state transitions from a next generation core (NGC). In a situation where the S1 connection or the NG connection is maintained, a problem of FIG. 5 may occur when the BS transmits a paging message to the UE.

FIG. 5 is a drawing for explaining a problem which may occur when a BS transmits a paging message to a UE in an RRC_INACTIVE state.

Referring to FIG. 5, in step S500, the UE may be in a lightly connected mode or a radio resource control (RRC)_INACTlVE state. Therefore, the MME/AMF may always keep an S1/NG connection of the activated UE. In the present specification, the S1/NG connection of the UE may be referred to as the UE-associated logical S1/NG-connection or the UE-associated connection.

In step S510, when downlink data arrives, the S-GW/UPF does not transmit a downlink data notification message to the MME/AMF to trigger an S1/NG paging message. The S-GW/UPF directly transmits only the downlink data to an anchor BS. The anchor BS may be any one of an eNB and a gNB.

Then, in step S520, the anchor BS may buffer the received downlink data. In addition, in step S530, the anchor BS may trigger paging via a Uu/NG3 interface. The Uu/NG interface may be an interface which connects the anchor BS and the UE in an RRC section. In addition, since it is possible for the UE to move to the coverage of other BSs, in step S532, the anchor BS may transmit an X2/Nn paging request message to a neighboring BS with an X2/Nn interface. The neighboring BS may be any one of the eNB and the gNB. When the neighboring BS receives the X2/Xn paging request message from the anchor BS, in step S534, the neighboring BS may broadcast the paging message within the coverage of the neighboring BS. If the UE responds to the paging message, the neighboring BS may notify the anchor BS that the UE is located in the coverage of the neighboring BS. However, if the UE does not respond to the paging message via the Uu/NG3 interface, the anchor BS does not know the location of the UE. Therefore, the anchor BS cannot deliver to the UE the downlink data received from a core network.

In the aforementioned scenario, since the S-GW/UPF does not know whether the anchor BS delivers downlink data provided by the S-GW/UPF to the UE, the S-GW/UPF may transmit subsequent downlink data to the anchor BS. Therefore, the anchor BS may buffer the data and repeat the paging towards the UE. When the anchor BS continuously performs data buffering and paging even if the anchor BS has failed in the paging for the UE, unnecessary signalling between the UE and the BS or between the BSs may be caused. Therefore, upon failing in paging for the UE in the RRC_INACTIVE state or the UE in the lightly connected mode, the BS needs to inform the MME/AMF about the failure of the paging. Hereinafter, a method in which a BS informs an MME/AMF about a failure of a paging for a UE and an apparatus supporting the method will be described in detail according to an embodiment of the present invention.

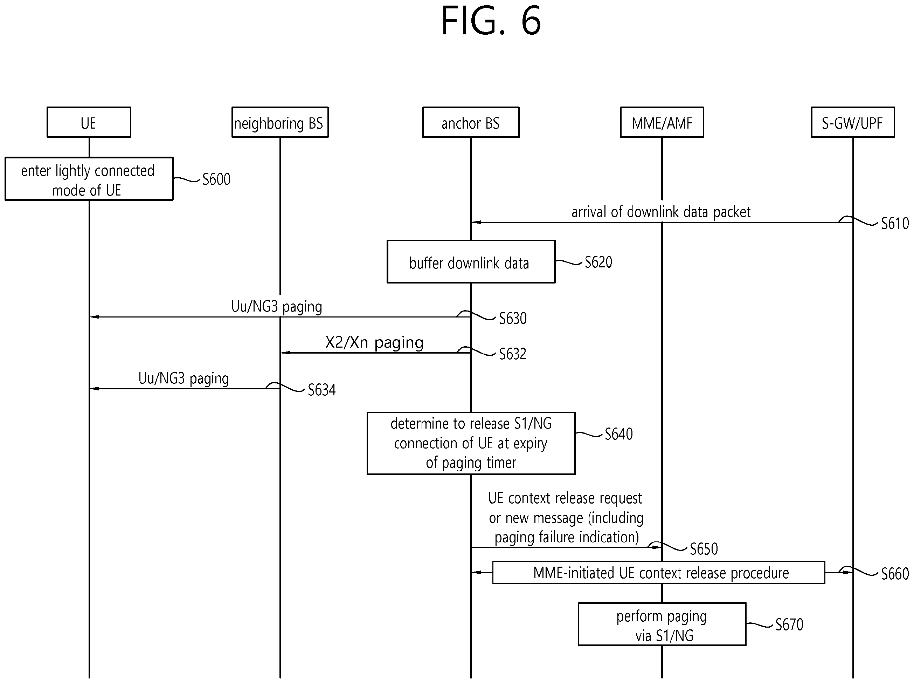

FIG. 6 shows a procedure in which a UE informs an MME about a failure of paging for a UE according to an embodiment of the present invention.

Referring to FIG. 6, in step S600, the UE may be in a lightly connected mode or a radio resource control (RRC)_INACTIVE state. Therefore, the MME/AMF may always keep an S1/NG connection of the activated UE. In the present specification, the S1/NG connection of the UE may be referred to as the UE-associated logical S1/NG-connection or the UE-associated connection.

In step S610, when downlink data arrives, the S-GW/UPF may directly transmit the downlink data to an anchor BS. The anchor BS may be any one of an eNB and a gNB. In the embodiment of FIG. 6, the S-GW/UPF does not transmit to the MME/AMF a downlink data notification message. Therefore, the MME/AMF may not know that there is the downlink data to be transmitted to the UE.

In step S620, the anchor BS may buffer the downlink data received from a core network or an NGC.

In step S630, the anchor BS may trigger a paging message towards the UE. The paging message may be transmitted to the UE via a Uu/NG3 interface. In this case, the anchor BS may page cells which belong to the anchor BS.

In addition, in step S632, the anchor BS may transmit an X2/Xn paging request message to a neighboring BS with an X2/Xn interface. This is because it is possible for the mobile UE to move to the coverage of other BSs. The neighboring BS may be any one of the eNB and the gNB. Then, in step S634, the neighboring BS may broadcast a paging message via the Un/NG3 interface. In this case, the neighboring BS may page cells which belong to the neighboring BS.

In addition, the anchor BS may start a paging timer. The paging timer may start when the paging message is transmitted to the UE via the Uu/NG3 interface. Alternatively, the paging timer may start when the paging message is transmitted to the neighboring BS via the X2/Xn interface. If the anchor BS receives a response to the paging message before the paging timer expires, the anchor BS may be aware that the UE is reachable. The response to the paging message may be received from the UE via the Uu/NG3 interface. The response to the paging message may be received from the neighboring BS via the X2/Xn interface.

In step S640, the anchor BS may wait for the response to the paging message. When the paging timer expires, the anchor BS may determine to release the S1/NG connection of the UE. That is, if the anchor BS does not receive the response to the paging message until the paging timer expires, the anchor BS may determine to release the S1/NG connection of the UE. This is because the UE is not located in the area controlled by the anchor BS.

Alternatively, in step S640, the anchor BS may wait for the response to the paging message. When the anchor BS does not receive the response to the paging message, the anchor BS may retransmit the paging message. For example, the anchor BS may determine whether the response to the paging message is received based on the paging timer. When a total transmission count of the paging message reaches a threshold transmission count, the anchor BS may no longer retransmit the paging message. Instead, the anchor BS may determine to release the S1/NG connection of the UE. The threshold transmission count may be predefined according to the UE, the anchor BS, or the network.

In step S650, the anchor BS may transmit to the MME/AMF a message for releasing the S1/NG connection of the UE. The message may be any one of a new message and a UE context release request message. The message may include an indication informing the MME/AMF of a failure of paging for the UE. The indication may be a paging failure indication. In addition, the indication informing the MME/AMF of the failure of paging for the UE may be included in a UE context release complete message.

A UE context release request message may be a message transmitted to request the MME/AMF that the BS releases a UE-associated logical S1/NG-connection. The BS which controls the UE-associated logical S1/NG-connection may initiate a UE context release request procedure by generating the UE context release request message towards an affected MME/AMF.

In step S660, when the MME/AMF receives the message including the paging failure indication from the anchor BS, the MME/AMF may trigger a UE context release procedure to prevent the S-GW/UPF from transmitting subsequent downlink data to the anchor BS. The UE context release procedure initiated by the MME/AMF may be a procedure in which the MME/AMF instructs to release the UE-associated logical S1/NG-connection.

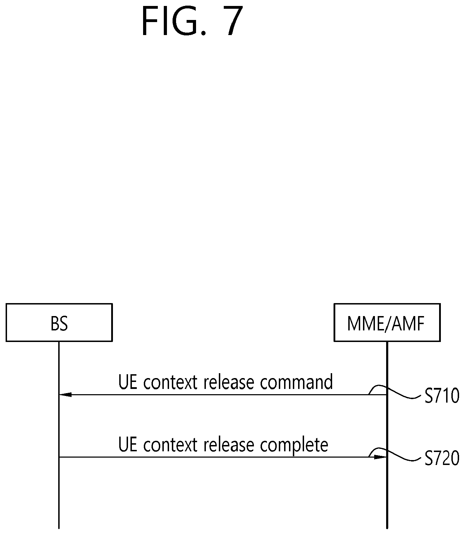

FIG. 7 shows an MME/AMF-initiated UE context release procedure according to an embodiment of the present invention.

Referring to FIG. 7, in step S710, the MME/AMF may transmit a UE context release command message to a BS.

In step S720, when the BS receives the UE context release command message, the BS may release all associated signaling and user data delivery resources, and may transmit a UE context release complete message to the MME/AMF.

Returning to FIG. 6, in step S660, when the MME/AMF receives from the anchor BS a message including a paging failure indication, the MME/AMF may transmit to the anchor BS a UE context release command message or a new message. When the anchor BS receives the UE context release command message or the new message from the MME/AMF, the anchor BS may delete the UE context, and in step S620, may discard buffered downlink data. In addition, the anchor BS may transmit to the MME/AMF the UE context release complete message or the new message.

In step S670, when the MME/AMF receives from the anchor BS the UE context release complete message or the new message, the MME/AMF may perform paging via S1/NG to find the location of the UE. The paging performed in steps S630, S632, and S634 may be RAN-initiated paging initiated by the BS, whereas the paging performed in step S670 may be MME/AMF-initiated paging initiated by the MME/AMF. That is, the MME/AMF may initiate a paging procedure by transmitting the paging message to at least one BS belonging to the MME/AMF, and the at least one BS which has received the paging message may perform paging of the UE in at least one cell belonging to a tracking area. Therefore, in step S670, the MME/AMF may find the location of the UE across an area wider than that attempted by the RAN paging. Although the anchor BS has failed in the paging for the UE in steps S630, S632, and S634, the MME/AMF may succeed in the paging for the UE in step S670.

For example, in step S670, when the MME/AMF receives from the anchor BS an indication indicating a failure of RAN paging, the MME/AMF may perform paging via S1/NG to find the location of the UE. The indication indicating the failure of the RAN paging may be a paging failure indication.

According to an embodiment of the present invention, the anchor BS may inform the MME/AMF about an indication indicating a failure of paging for the UE. The indication may be delivered to the MME/AMF through a UE context release procedure or a new procedure. Accordingly, it is possible to prevent unnecessary signalling which possibly occurs when the anchor BS repeats data buffering and paging even if the anchor BS has failed in the paging for the UE. In addition, the MME/AMF may trigger S1/NG paging to find the UE. Further, according to an embodiment of the present invention, a paging timer is newly defined and thus the anchor BS which has transmitted the paging message may detect whether it has failed in the paging for the UE. Accordingly, the anchor BS may check whether the UE is reachable.

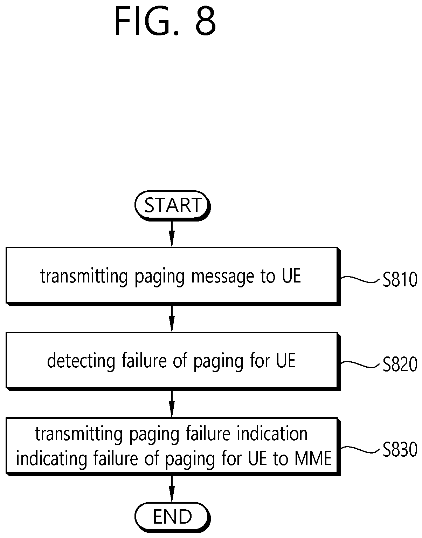

FIG. 8 is a block diagram showing a method in which a BS informs an MME about a failure of paging for a UE according to an embodiment of the present invention.

Referring to FIG. 8, in step S810, the BS may transmit a paging message to the UE. The UE may be in a lightly connected mode or a radio resource control (RRC) inactive mode. The lightly connected mode or the RRC inactive mode may be a mode where a connection between the UE and the BS is released and the UE-associated connection between the BS and the MME is kept.

In step S820, the BS may detect a failure of paging for the UE.

In step S830, the BS may transmit to the MME a paging failure indication indicating the failure of paging for the UE. The MME may be an access and mobility function (AMF).

In addition, the BS may initiate a paging timer. The failure of paging for the UE may be detected when a response to the transmitted paging message is not received from the UE until the initiated paging timer expires. The paging failure indication may be transmitted to the MME when the failure of paging for the UE is detected.

In addition, the BS may re-transmit the paging message to the UE when a response to the transmitted paging message is not received from the UE. The failure of the paging for the UE may be detected when a total transmission count of the paging message is equal to a threshold transmission count of the paging message. The paging failure indication may be transmitted to the MME when the failure of the paging for the UE is detected.

In addition, the BS may determine to release the UE-associated connection between the BS and the MME. In addition, the BS may transmit to the MME a message indicating to release the UE-associated connection between the BS and the MME. In addition, the BS may delete a UE context for the UE. Accordingly, the UE-associated connection between the BS and the MME may be released.

In addition, the BS may buffer downlink data received from a serving gate way (S-GW). In addition, the BS may discard the buffered downlink data when the paging for the UE is failed.

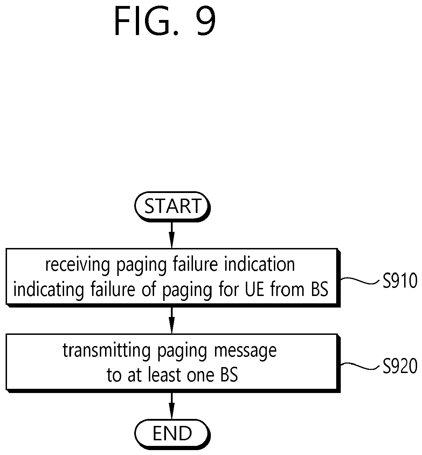

FIG. 9 is a block diagram showing a method in which an MME receives from a BS a failure of paging for a UE according to an embodiment of the present invention.

In step S910, the MME may receive from the BS a paging failure indication indicating a failure of paging for the UE.

In step S920, the MME may transmit a paging message to at least one BS. The at least one BS may be a BS having a cell belonging to a tracking area in which the UE is registered.

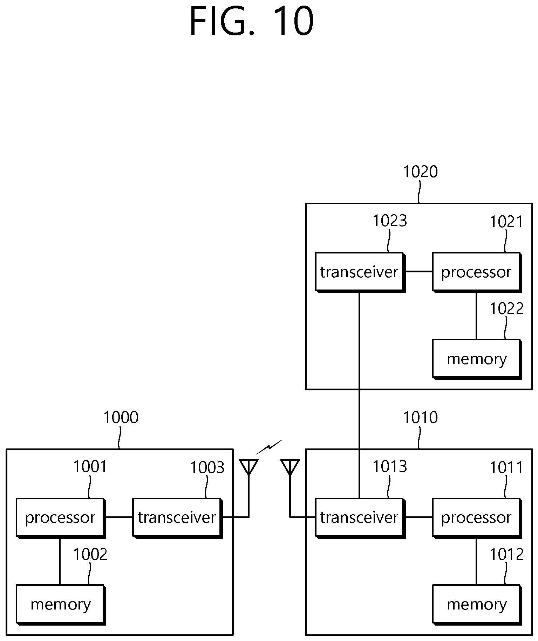

FIG. 10 is a block diagram illustrating a wireless communication system according to the embodiment of the present invention.

A UE 1000 includes a processor 1001, a memory 1002 and a transceiver 1003. The memory 1002 is connected to the processor 1001, and stores various information for driving the processor 1001. The transceiver 1003 is connected to the processor 1001, and transmits and/or receives radio signals. The processor 1001 implements proposed functions, processes and/or methods. In the above embodiment, an operation of the UE may be implemented by the processor 1001.

A BS 1010 includes a processor 1011, a memory 1012 and a transceiver 1013. The memory 1012 is connected to the processor 1011, and stores various types of information for driving the processor 1011. The transceiver 1013 is connected to the processor 1011, and transmits and/or receives radio signals. The processor 1011 implements proposed functions, processes and/or methods. In the above embodiment, an operation of the BS may be implemented by the processor 1011.

A MME/AMF 1020 includes a processor 1021, a memory 1022 and a transceiver 1023. The memory 1022 is connected to the processor 1021, and stores various types of information for driving the processor 1021. The transceiver 1023 is connected to the processor 1021, and transmits and/or receives radio signals. The processor 1021 implements proposed functions, processes and/or methods. In the above embodiment, an operation of the MME/AMF may be implemented by the processor 1021.

The processor may include an application-specific integrated circuit (ASIC), a separate chipset, a logic circuit, and/or a data processing unit. The memory may include a read-only memory (ROM), a random access memory (RAM), a flash memory, a memory card, a storage medium, and/or other equivalent storage devices. The transceiver may include a base-band circuit for processing a wireless signal. When the embodiment is implemented in software, the aforementioned methods can be implemented with a module (i.e., process, function, etc.) for performing the aforementioned functions. The module may be stored in the memory and may be performed by the processor. The memory may be located inside or outside the processor, and may be coupled to the processor by using various well-known means.

Various methods based on the present specification have been described by referring to drawings and reference numerals given in the drawings based on the aforementioned examples. Although each method describes multiple steps or blocks in a specific order for convenience of explanation, the invention disclosed in the claims is not limited to the order of the steps or blocks, and each step or block can be implemented in a different order, or can be performed simultaneously with other steps or blocks. In addition, those ordinarily skilled in the art can know that the invention is not limited to each of the steps or blocks, and at least one different step can be added or deleted without departing from the scope and spirit of the invention.

The aforementioned embodiment includes various examples. It should be noted that those ordinarily skilled in the art know that all possible combinations of examples cannot be explained, and also know that various combinations can be derived from the technique of the present specification. Therefore, the protection scope of the invention should be determined by combining various examples described in the detailed explanation, without departing from the scope of the following claims.

## Claims

1. A method for informing, by a base station (BS), a mobility management entity (MME) about a failure of a paging for a user equipment (UE) in a wireless communication system,
transmitting a paging message to the UE;
detecting the failure of the paging for the UE; and
transmitting a paging failure indication indicating the failure of the paging for the UE, to the MME.

2. The method of claim 1, wherein the UE is in a lightly connected mode or a radio resource control (RRC) inactive mode.

3. The method of claim 2, wherein the lightly connected mode or the RRC inactive mode is a mode where a connection between the UE and the BS is released and the UE related connection between the BS and the MME is kept.

4. The method of claim 1, further comprising:
initiating a paging timer.

5. The method of claim 4, wherein the failure of the paging for the UE is detected, when the BS does not receive a response to the transmitted paging message from the UE until the initiated paging timer expires.

6. The method of claim 5, wherein the paging failure indication is transmitted to the MME, when the failure of the paging for the UE is detected.

7. The method of claim 1, further comprising:
re-transmitting the paging message to the UE, when the BS does not receive a response to the transmitted paging message from the UE,
wherein the failure of the paging for the UE is detected, when a number of total transmission of the paging message is equal to a number of threshold transmission of the paging message.

8. The method of claim 1, further comprising:
determining to release the UE related connection between the BS and the MME.

9. The method of claim 8, further comprising:
transmitting a message indicating to release the UE related connection between the BS and the MME, to the MME.

10. The method of claim 9, further comprising:
deleting a UE context for the UE.

11. The method of claim 10, wherein the UE related connection between the BS and the MME is released.

12. The method of claim 10, further comprising:
buffering a downlink data received from serving gate way (S-GW).

13. The method of claim 12, further comprising:
discarding the buffered downlink data when the paging for the UE is failed.

14. The method of claim 1, wherein the MME is an Access and Mobility Function (AMF).

15. A method for receiving, by a mobility management entity (MME), a failure of a paging for a user equipment (UE) from a base station (BS) in a wireless communication system,
receiving a paging failure indication indicating the failure of the paging for the UE, from the BS; and
transmitting a paging message to at least one BS,
wherein the at least one BS is a BS having a cell belonging to a tracking area in which the UE is registered.
